# EUROPEAN PATENT APPLICATION

(11) **EP 3 691 208 A1**
(43) Date of publication of application: **05.08.2020**
(21) Application number: 18861353.3
(22) Date of filing: 11.09.2018
(51) Int. Cl.: H04L 12/803

(54) **TRAFFIC OPTIMIZATION METHOD FOR TRANSPARENT CACHE, LOAD BALANCER AND STORAGE MEDIUM**

(30) Priority: 26.09.2017 CN 201710881383
(71) Applicant: ZTE Corporation, Shenzhen, Guangdong 518057 (CN)
(72) Inventor: LI, Kui, Shenzhen, Guangdong 518057 (CN); SHI, Meikang, Shenzhen, Guangdong 518057 (CN); YIN, Qin, Shenzhen, Guangdong 518057 (CN); ZHANG, Yu, Shenzhen, Guangdong 518057 (CN); CHEN, Wei, Shenzhen, Guangdong 518057 (CN)
(74) Representative: Blumbach · Zinngrebe Patentanwälte PartG mbB
(86) International application number: PCT/CN2018/105118
(87) International publication number: WO 2019/062543

(57) **Abstract**

The embodiments of the present disclosure disclose a traffic optimization method for transparent caching, a load balancer and a storage medium, and the method is applied to a load balancer in a transparent cache system in a cloud/virtualization environment, and includes determining a service property of a request of a terminal for accessing a website upon receipt of the request; and adjusting a transmission path of traffic according to the service property of the request, the traffic including the request and file data from the website for responding to the request.

## Description

### CROSS REFERENCE TO RELATED APPLICATION

The present application is based on and claims priority to Chinese Patent Application No. 201710881383.1, filed on September 26, 2017, the entire contents of which are incorporated herein by reference.

### TECHNICAL FIELD

The present disclosure relates to the field of network technology, and in particular, to a traffic optimization method for transparent caching, a load balancer, and a storage medium.

### BACKGROUND

In a conventional mode, transparent caching is realized based on a hardware service load balancer (SLB), a cache server, a router (or a switch), and the like, and traffic optimization on the load balancer is limited by the service load balancer, and therefore, it is hard to achieve optimization flexibly at a service level according to service characteristics. In a cloud/virtualization scenario, all related network elements such as a load balancer, a cache server, a network, and a storage are virtualized, and functions of the network elements are implemented by software.

However, current transparent caching methods face the problems of long response delay of a user's cacheable service request, and slow download rate.

### SUMMARY

A traffic optimization method for transparent caching, a load balancer, and a storage medium are provided according to the embodiments of the present disclosure, so as to solve the problems of long response delay of a user's cacheable service request and slow download rate in a transparent caching process in a cloud/virtualization environment.

A traffic optimization method for transparent caching provided according to the embodiments of the present disclosure is applied to a load balancer in a transparent cache system, and includes:
determining a service property of a request of a terminal for accessing a website upon receipt of the request; and
adjusting a transmission path of traffic according to the service property of the request, the traffic including the request and file data from the website for responding to the request.

A load balancer in a transparent cache system provided according to the embodiments of the present disclosure includes a memory having a computer program stored therein, and a processor which executes the computer program to:
determine a service property of a request of a terminal for accessing a website upon receipt of the request; and
adjust a transmission path of traffic according to the service property of the request, the traffic including the request and file data from the website for responding to the request.

A computer-readable storage medium provided according to the embodiments of the present disclosure having a computer program stored therein which, when being executed by at least one processor, causes the at least one processor to perform the steps of the above method.

With the traffic optimization method for transparent caching, the load balancer and the storage medium provided according to the embodiments of the present disclosure, when the load balancer receives the user request, the transmission path of the traffic is adjusted according to the service property of the user request, which avoids what is performed in the existing mode that all the user requests are forwarded to a cache server, so that the problem of resource consumption in the conventional mode is solved, the response delay of the user's cacheable request is effectively reduced, and the download rate is increased, thereby improving user experience.

### BRIEF DESCRIPTION OF THE DRAWINGS

Fig. 1 is a flowchart illustrating an existing transparent caching process;
Fig. 2 is a flowchart illustrating a traffic optimization method for transparent caching in a cloud/virtualization environment according to the embodiments of the present disclosure;
Fig. 3 is a flowchart illustrating an optional traffic optimization method for transparent caching in a cloud/virtualization environment according to the embodiments of the present disclosure; and
Fig. 4 is a schematic structural diagram of a load balancer in a transparent cache system in a cloud/virtualization environment according to the embodiments of the present disclosure.

### DETAILED DESCRIPTION

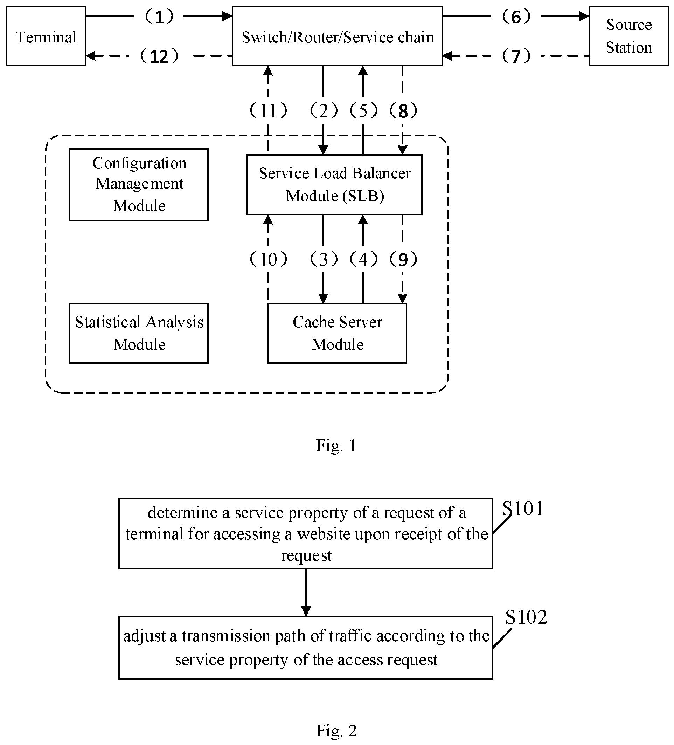

Before the embodiments of the present disclosure are described in detail, an existing transparent caching process is first briefly described below, as shown in Fig. 1:
Step 1: an HTTP request from a terminal enters a router/switch.
Step 2: the HTTP request is imported into a load balancing module (SLB) of a transparent cache system by the router/switch.
Step 3: the SLB selects a cache server through a duplicate-content-removing load balancing algorithm, and forwards the HTTP request of the user to the selected cache server.
Step 4: after receiving the HTTP request forwarded by the SLB, the cache server searches a local cache for a file requested by the user.
   If the cache server finds the file requested by the user in the local cache, the cache server reads file data and returns the file data to the SLB. If the cache server does not find the file requested by the user in the local cache, the cache server forwards the request of the user to the SLB.
Step 5: after receiving the file data returned by the cache server, the SLB passes the file data through to the user, so as to enable the user to acquire the complete file.
   After receiving the HTTP request forwarded by the cache server, the SLB forwards the HTTP request to the router/switch.
Step 6: the router/switch forwards the HTTP request to a source station.
Step 8: after receiving the HTTP request, the source station returns file data.
Step 9: the SLB returns the file data to the cache server.
Step 10: the cache server receives the file data, caches the file data locally according to a cache policy, and forwards the file data to the SLB.
Step 11: after receiving the file data returned by the cache server, the SLB returns the file data to the router/switch.
Step 12: the router/switch returns the file data to the user.

In a normal caching process in the prior art, user requests which cannot be cached and user requests which do not need to be cached are still sent to the cache server for processing, resulting in waste of resources of the load balancer and the cache server. Since the user requests which do not need to be cached and the user requests which cannot be cached consume the resources of the cache server, the problems of long response delay of a cacheable service request of the user and slow download rate are raised, thereby influencing user experience.

Therefore, for solving the problems in the prior art, a traffic optimization method for transparent caching in a cloud/virtualization environment, a load balancer, and a storage medium are provided according to the embodiments of the present disclosure. The embodiments of the present disclosure are described in detail below with reference to the accompanying drawings. It should be understood that the specific embodiments described herein are merely for explaining the present disclosure, but do not make any limitation to the present disclosure.

### Embodiment One

As shown in Fig. 2, a traffic optimization method for transparent caching is provided according to an embodiment of the present disclosure, and the method is applied to a load balancer in a transparent cache system in a cloud/virtualization environment, and includes:
S101: when a request (namely a Hyper Text Transfer Protocol (HTTP) request) of a terminal for accessing a website is received, determining a service property of the access request; and
S102: adjusting a transmission path of traffic according to the service property of the access request, the traffic including the access request and file data from the website for responding to the access request.

According to the embodiment of the present disclosure, when the load balancer receives the user request, the transmission path of the traffic is adjusted according to the service property of the user request, which avoids what is performed in the existing mode that all the user requests are forwarded to the cache server, so that the problem of resource consumption in the conventional mode is solved, the response delay of the user's cacheable request is effectively reduced, and the download rate is increased, thereby improving the user experience.

On the basis of the above embodiment, an optional embodiment of the above embodiment is further provided. It should be noted that only the differences between the optional embodiment and the above embodiment are described for the purpose of simple description.

In the embodiment of the present disclosure, the words such as "first" and "second" used for distinguishing between parameters (e.g. service characteristic information) are merely for facilitating describing the present disclosure, and have no particular meaning in themselves.

Optionally, the step of adjusting a transmission path of traffic according to the service property of the request includes: determining whether the request meets a preset traffic optimization condition according to the service property of the request; forwarding the request to a website corresponding to the request when it is determined that the request meets the preset traffic optimization condition; and transmitting file data to the terminal when receiving the file data with which the website is responded.

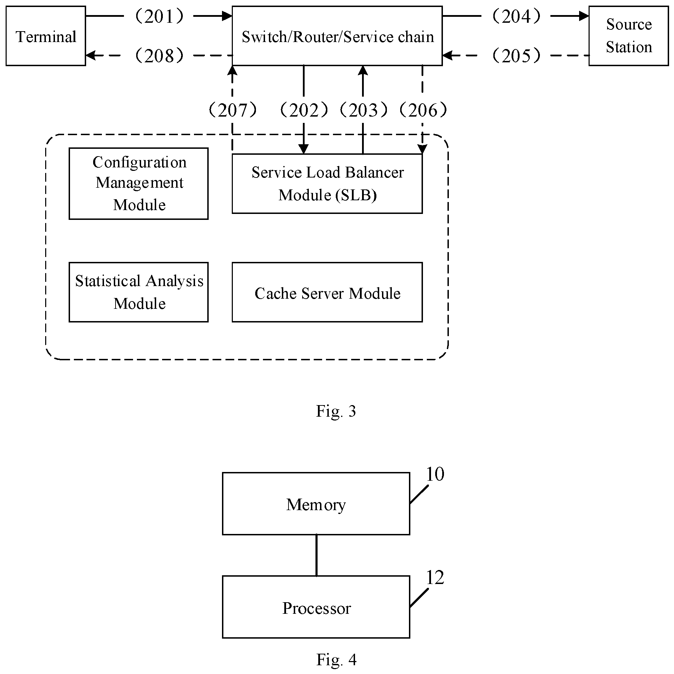

In an example, as shown in Fig. 3, a process of the optional embodiment includes:
Step 201: the user uses a browser or an Application (APP) client of the terminal to access a website (i.e., a source station).
Step 202: a router/switch/service chain gateway imports the user's HTTP request into an SLB of a transparent cache system.
Step 203: after receiving the user's request, the SLB determines whether the request meets the traffic optimization condition. If the request meets the traffic optimization condition, the SLB forwards the HTTP request to the router/switch directly.
Step 204: the router/switch forwards the HTTP request to the source station.
Step 205: after receiving the HTTP request, the source station returns the file data to the router/switch.
Step 206: the router/switch forwards the file data to the SLB.
Step 207: after receiving the file data returned from the source station, the SLB returns the file data to the router/switch directly.
Step 208: the router/switch forwards the file data to the terminal.

The transparent cache system further includes a cache server; and the traffic optimization condition is traffic which does not need to be forwarded and served by the cache server, or non-cacheable traffic.

In an optional embodiment, before the step of determining whether the request meets a preset traffic optimization condition according to the service property of the request, the method may further include generating at least one piece of service characteristic information for the traffic optimization condition; and generating and setting a regular expression according to the service characteristic information.

The step of determining a service property of the request may include extracting service characteristic information from the request; and matching with the regular expression by using the extracted service characteristic information as an input source.

In an embodiment, the step of determining whether the request meets a preset traffic optimization condition according to the service property of the request may include extracting service characteristic information from the request; matching and comparing the extracted service characteristic information with the regular expression; and determining that the request meets the traffic optimization condition when the extracted service characteristic information is successfully matched with the regular expression.

For example, the optional embodiment specifically includes the following steps:
S301: setting a service characteristic value of the traffic optimization condition.

The service characteristic value of the traffic optimization condition is set in a system background, and the service characteristic value includes, but is not limited to, a regular expression composed of information such as a source address, a source port, a destination address, and a destination port of a user request, and information such as a host address (HOST), a path (PATH), and a file name (FILE NAME) in Uniform Resource Locator (URL).

S302: receiving a user request.

The SLB receives the user request from a diversion module (the router/switch, etc.), and extracts service characteristic information according to the user request, and the service characteristic information includes, but is not limited to, a regular expression composed of information such as a source address, a source port, a destination address, and a destination port of the user request, and information such as a host address (HOST), a path (PATH), and a file name (FILE NAME) in URL

S303: matching and comparing the user request with the service characteristic value.

The service characteristic information extracted according to the user request in step S302 is matched and compared with the service characteristic value set in step S301. If there is a successfully matched service characteristic value, it is considered that the optimization condition is met; and if there is no matched service characteristic value, it is considered that the matching fails.

S304: determining whether to perform optimization operation according to the result of the matching and the comparison.

If the matching in step S303 succeeds, the optimization operation is performed, that is, the SLB forwards the HTTP request to the source station directly, and then directly returns the file data to the user after receiving the file data returned from the source station.

If the matching and the comparison in S303 fail, the optimization operation is not performed, that is, the SLB forwards the HTTP request to the cache server, and then directly returns the file data to the user after receiving the file data returned by the cache server (if there is a cache miss or the content expires, the data will be requested from the source station).

The traffic which does not need to be forwarded and cached by the cache server in the embodiment of the present disclosure includes the traffic which does not need to be cached, and the non-cacheable traffic. The embodiment of the present disclosure is illustrated below by two examples: the traffic which does not need to be cached, and the non-cacheable traffic.

For example, the optimization method for the non-cacheable traffic specifically includes the following steps:

S401: setting a service characteristic value of the traffic optimization condition for the non-cacheable traffic.

The service characteristic value of the non-cacheable traffic is set in the system background, and the service characteristic value includes, but is not limited to, a regular expression composed of information such as a source address, a source port, a destination address, and a destination port of a user request, and information such as a host address (HOST), a path (PATH), and a file name (FILE NAME) in URL.

S402: receiving a user request.

The SLB receives the user request from the diversion module, and extracts service characteristic information according to the user request, and the service characteristic information includes, but is not limited to, a regular expression composed of information such as a source address, a source port, a destination address, and a destination port of the user request, and information such as a host address (HOST), a path (PATH), and a file name (FILE NAME) in URL

S403: matching and comparing the user request with the service characteristic value of the non-cacheable traffic.

The service characteristic information extracted according to the user request in step S402 is matched and compared with the service characteristic value of the non-cacheable traffic set in step S401. If there is a successfully matched service characteristic value, it is considered that the optimization condition is met; and if there is no matched service characteristic value, it is considered that the matching fails.

S404: determining whether to perform optimization operation according to the result of the matching and the comparison.

If the matching in step S403 succeeds, the optimization operation is performed, that is, the SLB forwards the HTTP request to the source station directly, and then directly returns the file data to the user after receiving the file data returned from the source station.

If the matching and the comparison in S403 fail, the optimization operation is not performed, that is, the SLB forwards the HTTP request to the cache server, and then directly returns the file data to the user after receiving the file data returned by the cache server (if there is a cache miss or the content expires, the data will be requested from the source station through the SLB).

As the other example, the optimization method for the traffic which does not need to be cached, specifically includes the following steps:
S501: setting a service characteristic value of the traffic optimization condition for the traffic which does not need to be cached.

The service characteristic value of the traffic which does not need to be cached is set in the system background, and the service characteristic value includes, but is not limited to, a regular expression composed of information such as a source address, a source port, a destination address, and a destination port of a user request, and information such as a host address (HOST), a path (PATH), and a file name (FILE NAME) in URL

S502: receiving a user request.

The SLB receives the user request from the diversion module, and extracts service characteristic information according to the user request, and the service characteristic information includes, but is not limited to, a regular expression composed of information such as a source address, a source port, a destination address, and a destination port of the user request, and information such as a host address (HOST), a path (PATH), and a file name (FILE NAME) in URL

S503: matching and comparing the user request with the service characteristic value of the traffic which does not need to be cached.

The service characteristic information extracted according to the user request in step S502 is matched and compared with the service characteristic value of the traffic which does not need to be cached set in step S501. If there is a successfully matched service characteristic value, it is considered that the optimization condition is met; and if there is no matched service characteristic value, it is considered that the matching fails.

S504: determining whether to perform optimization operation according to the result of the matching and the comparison.

If the matching in step S503 succeeds, the optimization operation is performed, that is, the SLB forwards the HTTP request to the source station directly, and then directly returns the file data to the user after receiving the file data returned from the source station.

If the matching and the comparison in S503 fail, the optimization operation is not performed, that is, the SLB forwards the HTTP request to the cache server, and then directly returns the file data to the user after receiving the file data returned by the cache server (if there is a cache miss or the content expires, the data will be requested from the source station through the SLB).

In specific implementation, the embodiment of the present disclosure may be implemented by software modules. For example, a configuration management module and a service processing module may be provided.

The configuration management module is configured to set the service characteristic value under the control of the user, for example, to provide an operation display interface for the user to inform the user of an output format of the service characteristic value and a method and the like, and is also configured to send the set service characteristic value to the service processing module.

The service processing module is configured to receive the service characteristic value set and sent by the configuration management module, compare and match with the service characteristic value set by the configuration management module according to the received user request, and perform the optimization operation if the comparison and the matching are successful, otherwise, process the service according to the conventional process.

### Embodiment Two

As shown in Fig. 4, a load balancer in a transparent cache system in a cloud/virtualization environment is provided according to an embodiment of the present disclosure, and includes a memory 10 and a processor 12; the memory 10 stores a traffic-optimization computer program; and the processor 12 executes the computer program to determine a service property of a request of a terminal for accessing a website upon receipt of the request, and adjust a transmission path of traffic according to the service property of the request, the traffic including the request and file data from the website for responding to the request.

According to the embodiment of the present disclosure, when the load balancer receives the user request, the transmission path of the traffic is adjusted according to the service property of the user request, which avoids what is performed in the existing mode that all the user requests are forwarded to the cache server, so that the problem of resource consumption in the conventional mode is solved, the response delay of the user's cacheable request is effectively reduced, and the download rate is increased, thereby improving the user experience.

Optionally, the processor 12 executes the computer program to determine whether the request meets a preset traffic optimization condition according to the service property of the request, forward the request to a website corresponding to the request when it is determined that the request meets the preset traffic optimization condition, and transmit file data to the terminal when receiving the file data with which the website is responded.

The transparent cache system further includes a cache server; and the traffic optimization condition is traffic which does not need to be forwarded and served by the cache server, or non-cacheable traffic.

Optionally, the processor 12 executes the computer program to generate at least one piece of service characteristic information for the traffic optimization condition, and generate and set a regular expression according to the service characteristic information.

The processor 12 executes the computer program to extract service characteristic information from the request, match and compare the extracted service characteristic information with the regular expression, and determine that the request meets the traffic optimization condition when the matching succeeds.

It should be noted that the division of all the above program modules is merely provided as an example in the above description of the traffic optimization process performed by the load balancer of the above embodiment; in practical application, the above traffic optimization process may be distributed to different program modules as required, that is, the internal structure of the load balancer is divided into program modules different from the above ones, so as to complete all or part of the above process. In addition, the load balancer provided in the above embodiment and the above embodiments of the traffic optimization method for transparent caching belong to the same concept, and specific implementation of the load balancer may be found in the embodiments of the traffic optimization method, and thus will not be repeated here.

The memory 10 may be implemented by any type of volatile storage device or nonvolatile storage device, or a combination thereof. The nonvolatile memory may be a Read Only Memory (ROM), a Programmable Read-Only Memory (PROM), an Erasable Programmable Read-Only Memory (EPROM), an Electrically Erasable Programmable Read-Only Memory (EEPROM), a Ferromagnetic Random Access Memory (FRAM), a Flash Memory, a magnetic surface memory, an optical disc, or a Compact Disc Read-Only Memory (CD-ROM); and the magnetic surface memory may be a disk memory or a tape memory. The volatile memory may be a Random Access Memory (RAM) serving as an external cache. Illustratively but not restrictively, many forms of RAMs may be used, such as a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a Synclink Dynamic Random Access Memory (SLDRAM), and a Direct Rambus Random Access Memory (DRRAM). The memory 10 described in the embodiments of the present disclosure is intended to include, without being limited to, the above and any other suitable types of memories.

The methods disclosed in the above embodiments may be applied to the processor 12, or be implemented by the processor 12. The processor 12 may be an integrated circuit chip having signal processing capabilities. During the implementation of the methods, all the steps of the above methods may be performed through integrated logic circuits (in a form of hardware), or instructions (in a form of software) in the processor 12. The processor 12 may be a general purpose processor, a Digital Signal Processor (DSP), or other programmable logic device, discrete gate or transistor logic device, discrete hardware component, and the like. The processor 12 may implement or perform all the methods, steps and logic blocks disclosed in the embodiments of the present disclosure. The general purpose processor may be a microprocessor, or any other conventional processor. The steps of the methods disclosed according to the embodiments of the present disclosure may be directly implemented by a decoding processor (hardware), or implemented by a combination of hardware and software modules in the decoding processor. The software modules may be located in a storage medium which is located in the memory 10, and the processor 12 reads information from the memory 10 and performs the steps of the above methods in combination with its hardware.

### Embodiment Three

An embodiment of the present disclosure provides a computer-readable storage medium, which stores a traffic-optimization computer program for transparent caching in a cloud/virtualization environment, and when the computer program is executed by at least one processor, the step of the methods according to the Embodiment One are performed.

The computer-readable storage medium in the embodiment of the present disclosure may be an RAM, a flash memory, an ROM, an EPROM, an EEPROM, a register, a hard disk, a removable disk, a CD-ROM, or any other form of storage medium known in the prior art. A storage medium may be coupled to the processor, so that the processor can read information from the storage medium, and write information to the storage medium; or the storage medium may be a part of the processor. The processor and the storage medium may be located in an application specific integrated circuit.

It should be noted that reference may be made to the Embodiment One for the specific implementation of the Embodiment Two and the Embodiment Three, and the implementation of the Embodiment Two and the Embodiment Three produces the same technical effects as the implementation of the Embodiment One does.

Although specific examples of the present disclosure are described herein, those skilled in the art may design variations on the present disclosure without departing from the concept of the present disclosure. Inspired by the technical concept of the present disclosure, those skilled in the art may make various improvements in the present disclosure without departing from the contents of the present disclosure, and those improvements fall within the protection scope of the present disclosure.

## Claims

1. A traffic optimization method for transparent caching, which is applied to a load balancer in a transparent cache system, comprising:
determining a service property of a request of a terminal for accessing a website upon receipt of the request; and
adjusting a transmission path of traffic according to the service property of the request, the traffic comprising the request and file data from the website for responding to the request.

2. The method of claim 1, wherein the adjusting a transmission path of traffic according to the service property of the request comprises:
determining whether the request meets a preset traffic optimization condition according to the service property of the request;
forwarding the request to a website corresponding to the request in response to determining that the request meets the preset traffic optimization condition; and transmitting file data to the terminal in response to receiving the file data with which the website is responded.

3. The method of claim 2, wherein the transparent cache system further comprises a cache server; and the traffic optimization condition is traffic which does not need to be forwarded and served by the cache server, or non-cacheable traffic.

4. The method of claim 2 or 3, wherein before the determining whether the request meets a preset traffic optimization condition according to the service property of the request, the method further comprises:
generating at least one piece of service characteristic information for the traffic optimization condition; and
generating and setting a regular expression according to the service characteristic information.

5. The method of claim 4, wherein the determining whether the request meets a preset traffic optimization condition according to the service property of the request comprises:
extracting service characteristic information from the request;
matching and comparing the extracted service characteristic information with the regular expression; and
determining that the request meets the traffic optimization condition in response to the matching being successful.

6. A load balancer in a transparent cache system, comprising a memory having a computer program stored therein, and a processor which executes the computer program to:
determine a service property of a request of a terminal for accessing a website upon receipt of the request, and
adjust a transmission path of traffic according to the service property of the request, the traffic comprising the request and file data from the website for responding to the request.

7. The load balancer of claim 6, wherein the processor executes the computer program to determine whether the request meets a preset traffic optimization condition according to the service property of the request, forward the request to a website corresponding to the request in response to determining that the request meets the preset traffic optimization condition, and transmit file data to the terminal in response to receiving the file data with which the website is responded.

8. The load balancer of claim 7, wherein the transparent cache system further comprises a cache server; and the traffic optimization condition is traffic which does not need to be forwarded and served by the cache server, or non-cacheable traffic.

9. The load balancer of claim 6 or 7, wherein the processor executes the computer program to:
generate at least one piece of service characteristic information for the traffic optimization condition, and
generate and set a regular expression according to the service characteristic information.

10. The load balancer of claim 9, wherein the processor executes the computer program to:
extract service characteristic information from the request,
match and compare the extracted service characteristic information with the regular expression, and
determine that the request meets the traffic optimization condition in response to the matching being successful.

11. A computer-readable storage medium having a computer program stored therein which, when being executed by at least one processor, cause the at least one processor to perform the steps of the method of any one of claims 1 to 5.
